# EUROPEAN PATENT APPLICATION

(11) **EP 0 801 367 A1**
(43) Date of publication of application: **15.10.1997**
(21) Application number: 97106021.5
(22) Date of filing: 11.04.1997
(51) Int. Cl.: G08B 5/22, H04Q 7/18

(54) **Radio paging receiver capable of self-managing reception of service information such as wheather or news**

(30) Priority: 12.04.1996 JP 91464/96; 28.05.1996 JP 133467/96
(71) Applicant: NEC CORPORATION, Tokyo (JP)
(72) Inventor: Amma, Sadayuki, Kakegawa-shi, Shizuoka (JP); Tsunoda, Kazuyuki, Kakegawa-shi, Shizuoka (JP)
(74) Representative: Baronetzky, Klaus, Dipl.-Ing.

(57) **Abstract**

In a radio paging receiver including a processing part (10) for processing, in response to a radio signal carrying a call number assigned to the receiver and a service information signal representative of service information which succeeds the call number, the radio signal into the service information signal when the processing means detects the call number in the radio signal, a detecting part (5, 6) detects the service information signal as a detected service information signal to produce a detection pulse signal. A counting part (7, 7') has a count initially equal to a positive integer and counts down the count in response to the detection pulse signal to produce an enabling signal when the count is not equal to zero. A memory section (8) memorizes the detected service information signal as a memorized service information signal in response to the enabling signal. A announcing section (9) announces, in response to the memorized service information signal, the service information represented by the memorized service information signal. The counting part does not carry out the counting operation and production of the enabling signal but produces a zero count signal representative of a zero count in response to the detection pulse signal received when the count is equal to zero. The announcing section announces, in response to the zero count signal, the zero count represented by the zero count signal.

## Description

### Background of the Invention:

This invention relates to a radio paging receiver and, in particular, to a radio paging receiver having a function of receiving service information.

In recent years, development of a radio paging receiver (which may also be simply referred to as a receiver hereinafter) is remarkable and it is the mainstream to have a display function. A new service is started to transmit service information such as weather forecasts, news, stock prices, or the like. If desired, a user of the receiver can enjoy such service at an expense.

Sometimes, a recipient of the service does not pay a service charge. To deal with such problem, various methods have been proposed. For example, "Japanese Unexamined Patent Publication No. 202620/1987 entitled RADIO PAGING RECEIVER" discloses the use of a first paging call number for a paging operation and a second call number for reception of the service information. Whether or not the receiver is allowed to receive the service information based on the second call number is controlled by a control signal following the paging call signal. For example, when the recipient does not pay the charge, a transmission side calls the receiver in question by the use of the paging call number and transmits the control signal. Through an EEPROM with the content of a control operation at the receiver written therein, the receiver is inhibited from receiving the service information.

In the conventional receiver described above, reception of the service information is controlled by the use of the control signal following the paging call signal from the transmission side. During the control, a radio wave is occupied so that the service can not be offered to other receivers.

Japanese Unexamined Patent Publication No. 41827/1985 discloses a radio paging receiver in which a receiving function is disabled when a particular code indicative of nonpayment of a service charge is detected in a part of a message signal transmitted from a base station following a call signal. However, it is not assured at all that the possessor of the radio paging receiver turns on the radio paging receiver and that he is present within a service area. Thus, a high reliability in charge control can not be expected. In addition, subscribers of the radio call service must be supervised so that the supervising cost is required.

Japanese Unexamined Patent Publication No. 244312/1993 discloses an exchange service charging system in which an unpaying person who does not pay the service charge is supervised by an exchange (by a service provider) with reference to an identification number assigned to the radio paging receiver so that no call service is performed to the unpaying person.

In the exchange service charging system, the unpaying person who does not pay the service charge is supervised or managed by the exchange (by the service provider) with reference to the identification number assigned to the radio paging receiver so that the call service to the unpaying person is interrupted. This system is disadvantageous in that the supervision is troublesome and the operation cost is high.

### Summary of the Invention:

It is therefore an object of this invention to provide a radio paging receiver capable of self-managing reception of service.

It is another object of this invention to provide a radio paging receiver capable of carrying out contract reception control (charge control) for a radio call service and an information service with an operation cost such as a supervising cost suppressed low.

According to a first aspect of this invention, there is provided a radio paging receiver including processing means for processing, in response to a radio signal carrying a call number assigned to the receiver and a service information signal representative of service information which succeeds the call number, the radio signal into the service information signal when the processing means detects the call number in the radio signal, wherein the receiver comprises: detecting means connected to the processing means for detecting the service information signal as a detected service information signal to produce a detection pulse signal; counting means connected to the detecting means and having a count initially equal to a positive integer for carrying out a counting operation of counting down the count in response to the detection pulse signal to produce an enabling signal when the count is not equal to zero; memory means connected to the detecting means and the counting means for memorizing the detected service information signal as a memorized service information signal in response to the enabling signal; and announcing means connected to the memory means for announcing, in response to the memorized service information signal, the service information represented by the memorized service information signal.

According to a second aspect of this invention, there is provided a radio paging receiver including: receiving means for carrying out a receiving operation of receiving, as a received signal, a radio signal carrying a call number assigned to the receiver and a message signal representative of a message which succeeds the call number; and processing means for processing, in response to the received signal into the message signal when the processing means detects the call number in the received signal; wherein the receiver comprises: counting means connected to the processing means and having a count initially equal to a first positive integer for counting down the count whenever the processing means detects the call number and for producing, when the count decreases down a zero count, a disabled signal which disables the receiving operation of the receiving means.

According to a third aspect of this invention, there is provided a radio paging receiver including: receiving means for carrying out a receiving operation of receiving, as a received signal, a radio signal carrying a call number assigned to the receiver and a message signal representative of a message which succeeds the call number; and processing means for processing, in response to the received signal into the message signal when the processing means detects the call number in the received signal; wherein the receiver comprises: timer means for producing date change information whenever the timer means times 24 hours; and counting means connected to the date change information producing means and having a count initially equal to a first positive integer representative of the number of contractual reception days for counting down the count whenever the timer means produces the date change information and for producing, when the count decreases down a zero count, a disabled signal which disables the receiving operation of the receiving means.

### Brief Description of the Drawing:

Fig. 1 is a block diagram of a radio paging receiver according to a first embodiment of this invention;
Fig. 2 is a flow chart for use in describing operation of the radio paging receiver illustrated in Fig. 1;
Fig. 3 is a block diagram of a radio paging receiver according to a second embodiment of this invention;
Fig. 4 is a flow chart for use in describing a display operation of a residual number of contractual reception times in the radio paging receiver illustrated in Fig. 3;
Fig. 5 is a flow chart for use in describing a display operation of a residual number of contractual reception days in the radio paging receiver illustrated in Fig. 3;
Fig. 6 is a flow chart for use in describing a registering operation of a warning reference value in the radio paging receiver illustrated in Fig. 3;
Fig. 7 is a flow chart for use in describing a registering operation of the number of the contractual reception times in the radio paging receiver illustrated in Fig. 3; and
Figs. 8A through 8C are views illustrating examples of display of a residual amount of a reception contract in the radio paging receiver illustrated in Fig. 3, Fig. 8A showing the case of the number of reception times, Fig. 8B showing the number of reception days, Fig. 8C showing the number of a reception term.

### Description of the Preferred Embodiments:

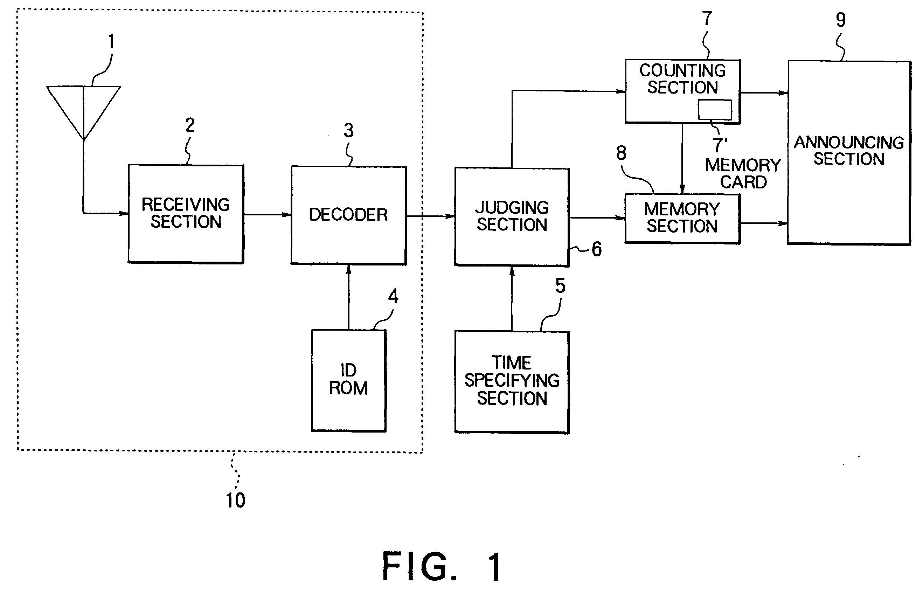

Referring to Fig. 1, description is made as a radio paging receiver according to a first embodiment of this invention. This figure shows those portions relating to reception of service information at a receiver while the other portions relating to reception of message information by a paging operation are omitted.

A radio signal sent from a transmission side is received by an antenna 1 as a reception signal. The reception signal is amplified and demodulated by a receiving section 2 into a demodulated signal. A decoder 3 decodes the demodulated signal into a readable signal. In addition, the decoder 3 compares a call number at the head of the reception signal and a call number preliminarily written in an IDROM (identification read-only memory) section 4 as a particular number for reception of a service information signal representative of the service information. Upon coincidence therebetween, the reception signal including the service information signal is delivered to a judging section 6.

A time specifying section 5 produces a time specifying signal indicative of a specified time duration during which the service information signal is receivable. The judging section 6 judges whether or not a reception time duration of reception of the service information signal is within the specified time duration. The judging section 6 thereby produces the service information signal as a detected service information signal and a coincidence signal as a detection pulse signal when the reception time duration is within the specified time duration.

The counting section 7 counts down by one from a preselected count representative of the number of receivable times. In presence of a residual count, the service information signal is memorized in a memory 8. After it is memorized in the memory 8, reception of the service information signal is notified to an announcing section 9. Manipulated by a user of the receiver, the announcing section 9 reads the service information signal from the memory 8. The the service information represented by the service information signal is announced by a display unit or a loudspeaker.

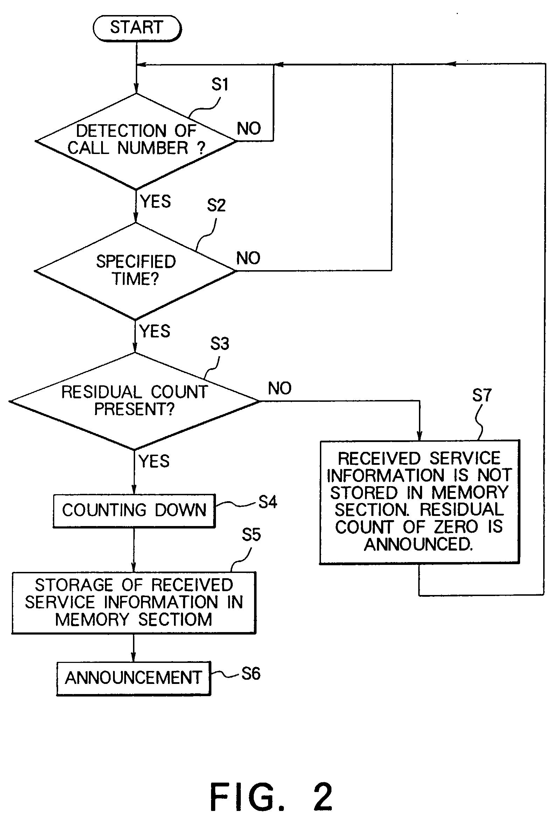

Turning to Fig. 2. the above-mentioned series of steps will be described. The decoder 3 judges whether or not the call number for the service information is detected in the reception signal supplied from the transmission side (S1). When it is detected, the judging section 6 judges whether or not the reception signal has arrived at a specified time within the specified time duration (S2). In case where the arrival has occurred at the specified time, the counting section 7 judges whether or not the residual count is present as the number of times of allowing the reception (S3). In presence of the residual count, the residual count is counted down (S4). The service information signal received is stored in the memory 8 (S4 and S5). In absence of the residual count, the service information signal received is not stored in the memory 8 and it is announced that the residual count is equal to zero (S7). The service information signal stored in the memory 8 is announced by the display unit or the loudspeaker in a predetermined operation.

For example, the number of receivable times used in the counting section 7 is stored in a memory card 7' such as a telephone card. The number of times stored therein is counted down at every reception to reach a zero count. At that time, the reception is impossible. Thus, the user purchases the card and, when no residual count is present, purchases another card again.

Generally, the specified time duration stored in the time specifying section 5 is selected within a low traffic time band or zone so that a channel efficiency at the transmission side is not degraded. Alternatively, a day in the week may be specified instead of the time. Furthermore, different time zones or different days in the week may be specified in correspondence to the contents of the service information so as to provide a wide variety of services.

As described above, the radio paging receiver according to the first embodiment of this invention restricts the number of receivable times by the use of the memory card preliminarily purchased and set in the counting section in order to prevent nonpayment of the charge for reception of the service information. Therefore, it is unnecessary to control the receiver from the transmission side by occupying the channel. This improves the channel efficiency. In addition, by selecting the reception time of the service information at a low traffic time, the channel efficiency is further improved. In addition, different reception times may be specified in correspondence to the contents of the service information so as to provide a much wider variety of services.

Summarizing in Figs. 1 and 2, the radio paging receiver includes a processing part (10) for processing, in response to a radio signal carrying a call number assigned to the receiver and a service information signal representative of service information which succeeds the call number, the radio signal into the service information signal when the processing means detects the call number in the radio signal.

The receiver comprises a detecting part (5, 6) connected to the processing part for detecting the service information signal as a detected service information signal to produce a detection pulse signal. A counting part (7, 7') is connected to the detecting part and has a count initially equal to a positive integer for carrying out a counting operation of counting down the count in response to the detection pulse signal to produce an enabling signal when the count is not equal to zero.

A memory section (8) is connected to the detecting part and the counting part for memorizing the detected service information signal as a memorized service information signal in response to the enabling signal.

A announcing section (9) is connected to the memory section for announcing, in response to the memorized service information signal, the service information represented by the memorized service information signal.

The counting part does not carry out the counting operation and production of the enabling signal but produces a zero count signal representative of a zero count in response to the detection pulse signal received when the count is equal to zero.

The announcing section is also connected to the counting part for announcing, in response to the zero count signal, the zero count represented by the zero count signal.

The counting part comprises a memory card (7') and a counting section (7). The memory card memorizes, as a memorized count, the count initially equal to the positive integer. The counting section is connected to the detecting part and the memory card for carrying out the counting operation of counting down the memorized count in response to the detection pulse signal to produce the enabling signal when the memorized count is not equal to zero.

The detecting part comprises a time specifying section (5) and a judging section (6). The time specifying section specifies, as a specified time duration, a time duration during which reception of the service information is enabled in the receiver. The judging section is connected to the processing part and the time specifying section for judging whether or not a reception time duration of reception of the service information signal is within the specified time duration. The judging section produces the service information signal as the detected service information signal and a coincidence signal as the detection pulse signal when the reception time duration is within the specified time duration.

The time specifying section may specify a day of the week as the specified time duration. The time specifying section may specify different specified times in dependence upon the contents of the service information.

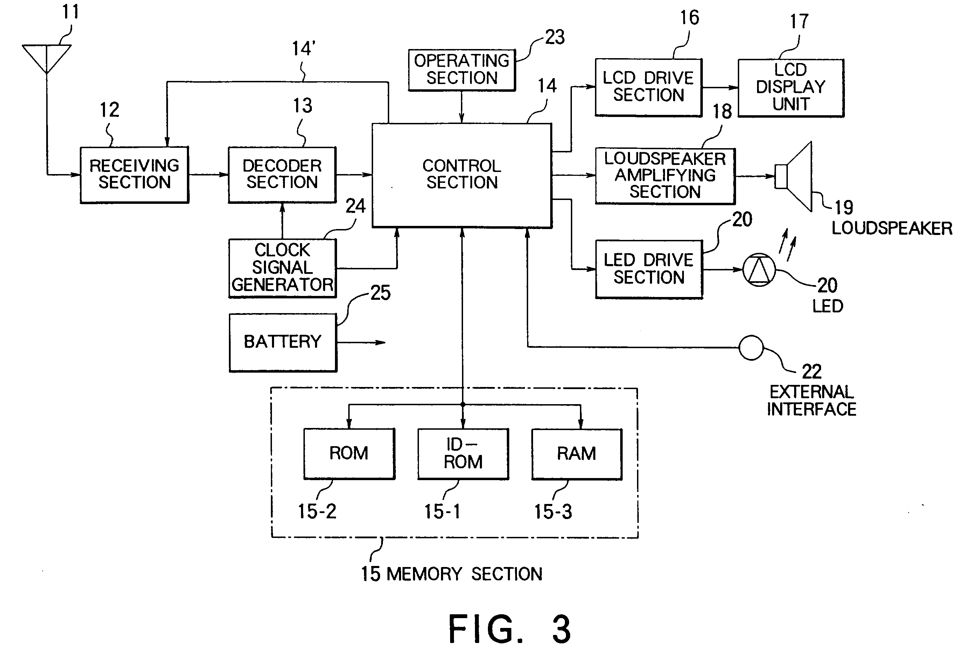

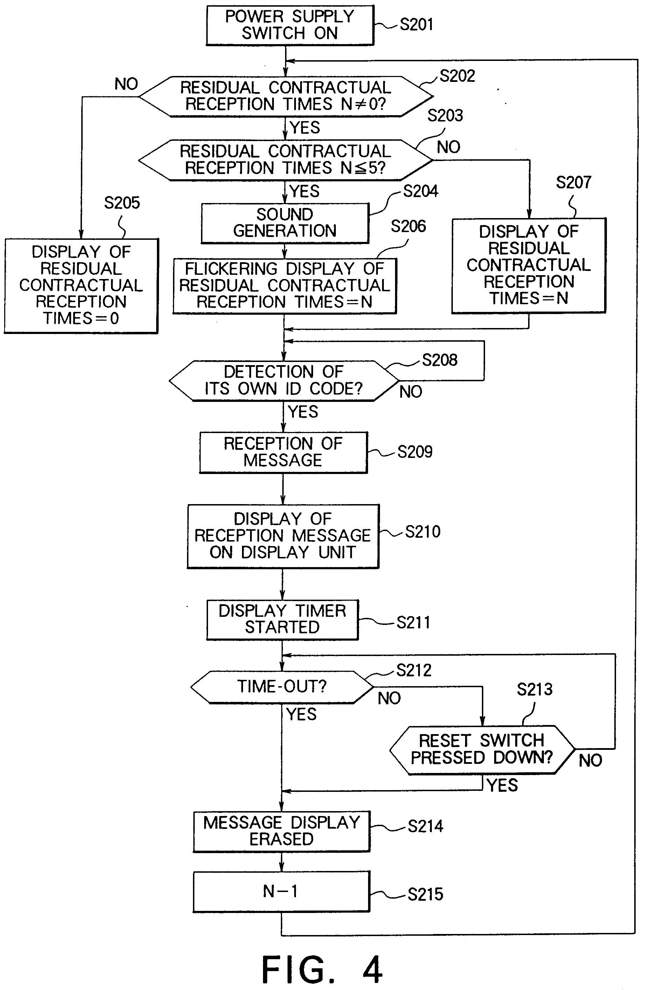

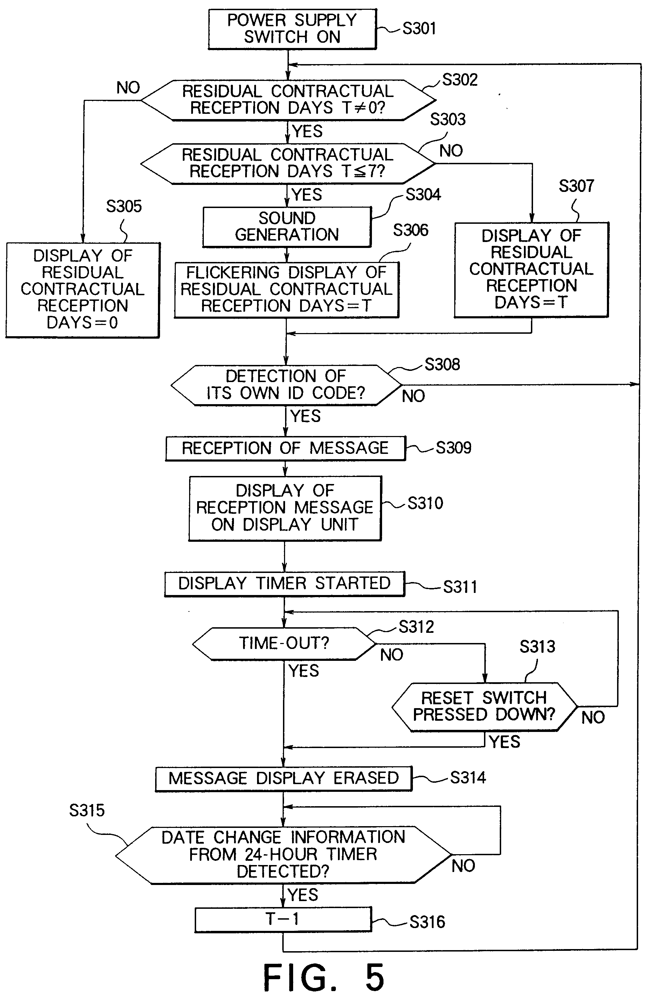

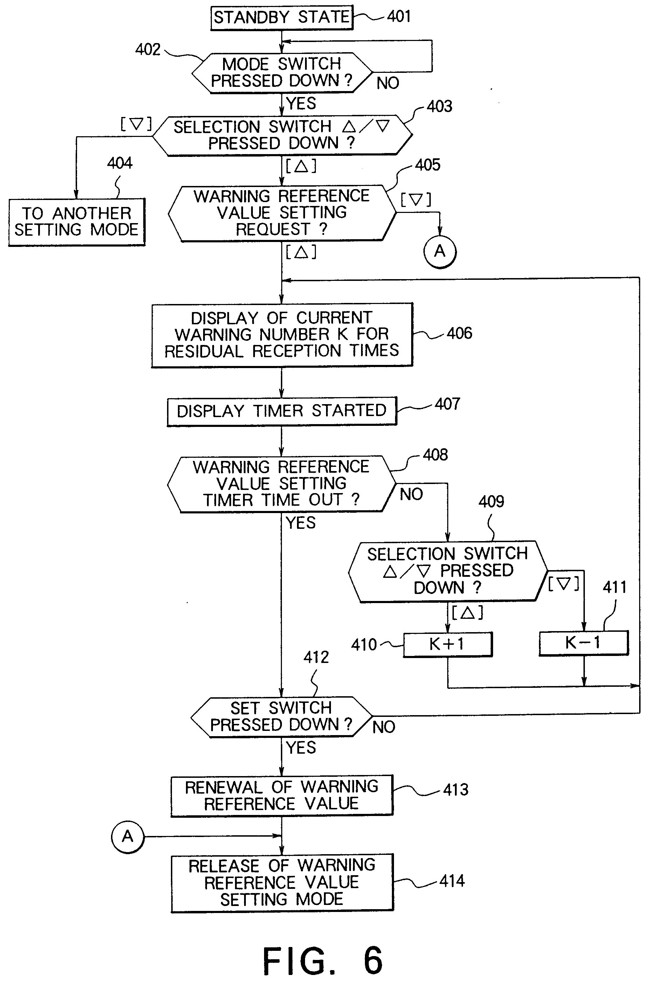

Fig. 3 is a block diagram of a radio paging receiver according to a second embodiment of this invention. Fig. 4 is a flow chart in case where a reception contract with a service provider specifies the number of reception times in the receiver of Fig. 3. Fig. 5 is a flow chart in case where the reception contract with the service provider specifies a term (reception days) in the receiver of Fig. 3. Fig. 6 is a flow chart for describing an operation of setting a warning reference value for a residual amount of contractual reception times or contractual reception days in the receiver of Fig. 3. Fig. 7 is a flow chart showing an operation flow of registering the number of the contractual reception times in the receiver of Fig. 3. Figs. 8A to 8C shows examples of display of the residual amount of the reception contract in the receiver of Fig. 3. Fig. 8A shows the case where the reception contract specifies the number of the reception times. Fig. 8B shows the number of the reception days. Fig. 8C shows the reception term.

The radio paging receiver illustrated in Fig. 3 comprises a receiving section 12 for receiving a radio call signal from a base station through an antenna 11 to demodulate the radio call signal, a decoder section 13 for decoding a demodulated call signal demodulated by the receiving section 12, a control section 14 which includes ID code collating means and counting means for counting the number of call reception times and the residual number of the contractual reception times and which monitors and controls an entirety of the radio paging receiver, a memory section 15 including an ID-ROM 15-1 storing its own ID code assigned to the receiver, an ROM 15-2 storing the number of the contractual reception times defined by the reception contract with the service provider, and an RAM 15-3 storing a reception message (or reception serivce information), an LCD drive section 16 for driving an LCD display unit, the LCD display unit 17 for displaying the reception message (or the reception service information), a loudspeaker amplifying section 18 for driving a loudspeaker, the loudspeaker 19 for producing a sound (monotone or complex tone), an LED drive section for driving an LED, the LED 21, an interface 22 with an external device for registering the own ID code and the number of the contractual reception times defined by the reception contact with the service provider, and a manipulating section 23 including a power supply switch, a set switch for setting various functions, and a reset switch for interrupting a warning announcement given by the loudspeaker 19 and the LED 21. For convenience of description, it is assumed that the decoder section 13, the control section 14, and the memory section 15 are implemented by separate hardware components. However, in most cases, they are implemented in a one-chip LSI in view of the reduction in size and in cost.

The radio signal received by the antenna 11 is amplified and demodulated by the receiving section 12. The demodulated call signal is decoded by the decoder 13 to be delivered to the control section 14. The control section 14 extracts an address signal (ID code) from reception data produced by the decoder 13 and compares the address signal with its own ID code preliminarily stored in the ID-ROM 15-2 of the memory section 15. Upon coincidence therebetween, the control section delivers an alert signal to the loudspeaker amplifying section 18 and the LED drive section 20 in order to notify reception of a radio call to a possessor of the radio paging receiver.

In addition, the control section 14 extracts a message signal (or a service information signal) following its own ID code and converts the message signal into message data (or service information) which are delivered to the LCD drive section 16. The LCD drive section 16 delivers the message data (or the service information) to the LCD display unit 17 to display the reception message (or the reception service information).

The control section 14 counts the number of the call reception times from a sender and subtracts the number of the call reception times from the number of the contractual reception times. When the residual number of the contractual reception times (residual contractual reception times) reach a preselected warning reference value, the control section delivers a loudspeaker alert signal and an LED alert signal to the loudspeaker amplifying section and the LED drive section, respectively.

The loudspeaker amplifying section 18 amplifies the loudspeaker alert signal supplied from the control section 14 to drive the loudspeaker 19. After conversion by the loudspeaker 19 into an audio signal, an alert sound is generated to announce the call reception to the possessor of the radio paging receiver. The LED drive section 20 amplifies the LED alert signal supplied from the control section 14 to drive the LED 21. The LED 21 emits light to announce the call reception to the possessor of the radio paging receiver.

A clock signal generator 24 serves to produce the alert signal and a timing clock for establishing synchronization with the reception signal. A battery 25 is used as a power supply to the radio paging receiver. The external interface 22 is an interface with the external device, such as an ROM writer, for registering its own ID code and the number of the contractual reception times defined by the contract with the service provider.

The manipulating section 23 comprises the power supply switch for energizing the radio paging receiver, the set switch for setting various functions, and the reset switch for resetting the announcement.

Next referring to Fig. 4 in addition to Fig. 3, description will be made about a display operation of displaying the residual number of the contractual reception times in case where the reception contract with the service provider specifies the number of the reception times.

In the following description, it is assumed that the number of the contractual reception times specified by the contract with the service provider is equal to 10 and that the preselected warning reference value (hereafter called a warning reference number of times) N is equal to 5.

The power supply switch (not shown) of the radio paging receiver is turned on (step S201 in Fig. 4). The control section 14 confirms presence/absence of a residual number of times for the number of the contractual reception times (hereafter called a residual number of the contractual reception times) stored in the ROM 15-1 of the memory section 15 (S202). When the residual number of the contractual reception times is equal to zero, the LCD display unit 17 displays that the residual number of the contractual reception times is equal to zero (S205). In this event, a call receiving operation is interrupted. Alternatively, the announcement and the storage of the reception message into the RAM 15-3 of the memory section 15 are inhibited even when its own ID code is received.

If the residual number of the contractual reception times is not equal to zero in the step S202, detection is carried out whether the residual number of the contractual reception times is equal to or smaller than the preselected warning reference number of times of five (S203). When the warning reference number of times is greater than the residual number of the contractual reception times, the LCD display unit 17 displays the residual number of the contractual reception times as illustrated in Fig. 6(A) in order to notify the residual number of the contractual reception times to the possessor of the radio paging receiver (S207). When the residual number of the contractual reception times is equal to or smaller than the warning reference number of times of five, the loudspeaker 19 produces a sound for warning the possessor of the radio paging receiver (S204). Simultaneously, the LCD display unit 17 flickers the display of the residual number of the contractual reception times for warning (206).

The control section 14 starts the call receiving operation after flickering the display of the residual number of the contractual reception times and waits for detection of the ID code (S208). When its own ID code is detected, the message signal following its own ID code is received (S209). The message signal is stored in the RAM 15-3 of the memory section 15 and displayed in the LCD display unit 17 (S210). Simultaneously, a display timer (not shown) is started (S211).

The control section 14 monitors the display timer (S212) and monitors press-down of the reset switch (not shown) of the manipulating section 23 (S213). After lapse of a predetermined time period (time-out of the display timer), an automatic reset function is activated to automatically erase the reception message displayed in the LCD display unit 17 (S214). When the press-down (manual reset) of the reset switch of the manipulating section 23 is detected before lapse of the predetermined time period (S213), the reception message displayed in the LCD display unit 17 is immediately erased (S214).

After the reception message is erased, one is subtracted from the residual number of the contractual reception times (N - 1: 10 - 1) (S215). Then, operation proceeds to the step S202. Through the steps S202 and S203, a new residual number of the contractual reception times (N : 9) is displayed in the LCD display unit 17. The above-mentioned operation is repeated until the residual number of the contractual reception times N becomes equal to zero.

As described above, the possessor of the radio paging receiver preliminarily makes the contract with the service provider for the number of service reception times. The radio paging receiver preliminarily registers the number of the contractual reception times defined by the contract and the warning reference number of times for use in production of the warning when the residual amount of the contractual reception times becomes small. Every time when the call service is received, subtraction from the number of the contractual reception times is carried out to calculate the residual number of the contractual reception times. The latest residual number of the contractual reception times obtained by subtraction is displayed. In addition, when the residual number of the contractual reception times reaches the warning reference number of times, the alarm sound indicative of reduction of the number of the contractual reception times is produced and the display of the latest residual number of the contractual reception times (N: 9) currently displayed in the LCD display unit is flickered. Thus, the warning is given to the possessor of the radio paging receiver so that the possessor of the radio paging receiver always recognizes the residual number of times for the number of the contractual reception times.

Upon making the contract, the service provider receives a communication charge corresponding to the number of the contractual times from the possessor of the radio paging receiver. Thus, it is possible to avoid a failure in collecting the communication charge.

Next referring to Fig. 5 in addition to Fig. 3, description will be made about a display operation of displaying the residual number of the contractual reception days in case where the contract with the service provider specifies the reception term.

In the following description, it is assumed that the contractual reception term (the number of the contractual reception days) specified by the contract with the service provider is equal to 30 days and that the preselected warning reference value (hereafter called a warning reference number of days) T is equal to 7 days.

The power supply switch of the radio paging receiver is turned on (step S301 in Fig. 5). The control section 14 confirms presence/absence of a residual term for the contractual reception term (hereafter called a residual number of the contractual reception days) stored in the ROM 15-1 of the memory section 15 (S302). When the residual number of the contractual reception days is equal to zero, the LCD display unit 17 displays that the residual number of the contractual reception days is equal to zero (S305). In this event, the call receiving operation is interrupted. Alternatively, the announcement and the storage of the reception message into the RAM 15-3 of the memory section 15 are inhibited even when its own ID code is received.

If the residual number of the contractual reception days is not equal to zero in the step S302, detection is carried out whether the residual number of the contractual reception days is equal to or smaller than the preselected warning reference number of days of seven (S303). When the warning reference number of days is greater than the residual number of the contractual reception days, the LCD display unit 17 displays the residual number of the contractual reception days as illustrated in Fig. 8B in order to notify the residual number of the contractual reception days to the possessor of the radio paging receiver (S307). When the residual number of the contractual reception days is equal to or smaller than the warning reference number of days of seven, the loudspeaker 19 produces a sound for warning the possessor of the radio paging receiver (S304). Simultaneously, the LCD display unit 17 flickers the display of the residual number of the contractual reception days for warning (S306).

The control section 14 starts the call receiving operation after flickering the display of the residual number of the contractual reception days and waits for detection of the ID code (S308). When its own ID code is detected, the message signal following its own ID code is received (S309). The message signal is stored in the RAM 15-3 of the memory section 15 and displayed by the LCD display unit 17 (S310). Simultaneously, the display timer (not shown) is started (S311).

The control section 14 monitors the display timer (S312) and monitors press-down of the reset switch of the manipulating section 23 (S313). After lapse of the predetermined time period (time-out of the display timer), the automatic reset function is activated to automatically erase the reception message displayed in the LCD display unit 17 (S314). When the press-down (manual reset) of the reset switch of the manipulating section 23 is detected before lapse of the predetermined time period (S313), the reception message displayed in the LCD display unit 17 is immediately erased (S314).

The control section 14 monitors a 24-hour timer (not shown) for producing date change information. Upon detection of the date change information (S315), one is subtracted from the number of the contractual reception days stored in the ROM 15-1 of the memory section 15 (T - 1: 30 - 1) (S316). Then, operation proceeds to the step S302. Through the steps S302 and S303, a new residual number of the contractual reception days (T : 29) is displayed in the LCD display unit 17. The above-mentioned operation is repeated until the residual number of the contractual reception days T becomes equal to zero.

As described above, the possessor of the radio paging receiver preliminarily makes the contract with the service provider for the service reception term (days). The radio paging receiver preliminarily registers the number of the contractual reception days defined by the contract and the warning reference number of days for use in production of the warning when the residual amount of the contractual reception days becomes small. Every time when the date change information from the 24-hour timer is detected, subtraction from the number of the contractual reception days is carried out to calculate the residual number of the contractual reception days. The latest residual number of the contractual reception days obtained by subtraction is displayed. In addition, when the residual number of the contractual reception days reaches the warning reference number of days, the alarm sound indicative of reduction of the number of the contractual reception days is produced and the display of the latest residual number of the contractual reception days currently displayed in the LCD display unit is flickered. Thus, the warning is given to the possessor of the radio paging receiver so that the possessor of the radio paging receiver always recognizes the residual number of days for the contractual reception term.

Upon making the contract, the service provider receives a communication charge corresponding to the number of the contractual reception days from the possessor of the radio paging receiver. Thus, it is possible to avoid a failure in collecting the communication charge.

Next referring to Fig. 6 in addition to Fig. 3, description will be made as regards a setting operation of the warning reference value (the reference number of times) for the residual amount of the contractual reception times (the residual number of the contractual reception times).

The possessor of the radio paging receiver can easily set the warning reference value (the reference number of times) for the residual amount of the contractual reception times (the residual number of the contractual reception times) by manipulating the switches in the manipulating section 23. In addition to the power supply ON/OFF switch, the set switch, and the reset switch described above, the manipulating section 23 comprises a mode switch and selection switches △/∇ having two contacts for selectively producing contact information of either one of the contacts (neither switch being illustrated).

When the radio paging receiver is in a standby state (step S401 in Fig. 6), the control section 14 monitors the operating condition of each switch in the manipulating section 23. Upon detection of press-down of the mode switch (S402), a setting mode is started in which press-down of the selection switches △/∇ is monitored (S403). Upon detection of press-down of the selection switch ∇, the operation proceeds to another setting mode (S404). Upon detection of press-down of the selection switch △, a warning reference value setting mode is started.

The warning reference value is set by the selection switches △/∇. Press-down of the selection switch △ indicates a warning reference value setting request while press-down of the selection switch ∇ indicates a warning reference value setting request cancellation.

The control section 14 monitors the warning reference value setting request (S405). Upon detection of press-down of the selection switch ∇, judgement is made that the warning reference value setting request cancellation is indicated. The operation then proceeds to a step S414 to cancel the warning reference value setting mode. Upon detection of the selection switch △, judgement is made that the warning reference value setting request is given. Then, the warning reference value currently set is displayed in the LCD display unit 17 (S406), a warning reference value setting timer (not shown) is started (S407). Simultaneously, press-down of the selection switches △/∇ is monitored (S409).

Upon detection of press-down of the selection switch △ before time-out of the warning reference value setting timer, the control section 14 adds one to the current warning reference value K (five times) (S410). Upon detection of press-down of the selection switch ∇, one is subtracted from the current warning reference value K (five times) (S411). The operation proceeds to the step S406 to display the new warning reference value K = 6 or 4 in the LCD display unit 17. Every time when the selection switches △/∇ are pressed down, one is added and subtracted, respectively.

When the time-out of the warning reference value setting timer is detected in the step S408, the control section 14 monitors press-down of the set switch (S412). Upon detection of press-down of the set switch, the new warning reference value K = 6 or 4 set in the steps S409 through 411 is overwritten on the current warning reference value K = 5 stored in the ROM 15-1 of the memory section 15 to renew the value into 6 or 4 (S413). Then, the warning reference value setting mode is released (S414).

In the foregoing, description has been made of a method of setting the warning reference value (warning reference number of times) for the residual number of the contractual reception times with reference to Fig. 6. The above description also applies to the case where the warning reference value is the warning reference number of days.

Next referring to Fig. 7 in addition to Fig. 3, description will be made about an operation of setting the number of the contractual reception times.

The number N of the contractual reception times set in the radio paging receiver can be easily renewed at a counter in a service provider's office or a paging service office.

Upon making the reception contract with the service provider, the owner of the radio paging receiver requests a person in charge at the counter in the service provider's office or the paging service office to register the number of the reception times specified in the contract.

The power supply switch of the radio paging receiver is turned on (step S501 in Fig. 7) and the external interface 22 is connected to, for example, an ROM writer. When the control section 14 identifies the above-mentioned connection (S502), an external setting mode is started (S503). The control section monitors input information from the ROM writer (S504). When the input information is not a contractual reception times setting request, the operation proceeds to another setting mode (S509). When the contractual reception times setting request is identified, contractual reception times information subsequently supplied is monitored. When the input of the contractual reception times information is identified (S505), the number of the contractual reception times is added to the current residual number of the contractual reception times stored in the ROM 15-1 of the memory section 15 to produce a new number of the contractual reception times. The number of the contractual reception times stored in the ROM 15-1 of the memory section is renewed (S506). The external setting mode is released (S507, S508).

As described above, upon making the reception contract, the number of the reception times/days (reception term) defined by the reception contract is registered in the memory section of the radio paging receiver through the external interface at the counter of the service provider's office. In addition, a desired value as the warning reference value (warning reference number of times/days) for the residual number of the contractual reception times/days is inputted from the manipulating section to be set and registered. At every reception of the call service, one is subtracted from the number of the contractual reception times/days preliminarily registered to calculate the new number of the contractual reception times/days to be displayed. When the number of the contractual reception times/days becomes equal to zero, the call receiving operation of the receiving section 12 is disabled by a disable signal (14') produced by the control section (14). When the number of the contractual reception times/days is reduced to reach the warning reference number of times/days preliminarily registered, the alarm sound is generated and the display of the current residual number of the contractual reception times/days is flickered. Thus, announcement is carried out to the possessor of the radio paging receiver. The possessor of the radio paging receiver can receive the call service for the number of the contractual reception times preliminarily defined by the contract with the service provider.

The possessor of the radio paging receiver can always recognize the residual number of times for the number of the contractual reception times by the alarm sound and the flickering display of the current number of the contractual reception times currently displayed in the LCD display unit.

Furthermore, the warning reference number of times/days can be desiredly and freely set by the possessor of the radio paging receiver.

Furthermore, the service provider preliminarily receives the communication charge corresponding to the number of the contractual reception times from the possessor of the radio paging receiver upon making the contract. Therefore, charge management is easy and failure in collection of the communication charge never occurs.

## Claims

1. A radio paging receiver including processing means (10) for processing, in response to a radio signal carrying a call number assigned to said receiver and a service information signal representative of service information which succeeds said call number, said radio signal into said service information signal when said processing means detects said call number in said radio signal, characterized in that said receiver comprises:
detecting means (5, 6) connected to said processing means for detecting said service information signal as a detected service information signal to produce a detection pulse signal;
counting means (7, 7') connected to said detecting means and having a count initially equal to a positive integer for carrying out a counting operation of counting down said count in response to said detection pulse signal to produce an enabling signal when said count is not equal to zero;
memory means (8) connected to said detecting means and said counting means for memorizing said detected service information signal as a memorized service information signal in response to said enabling signal; and
announcing means (9) connected to said memory means for announcing, in response to said memorized service information signal, said service information represented by said memorized service information signal.

2. A radio paging receiver as claimed in claim 1, characterized in that:
said counting means does not carry out said counting operation and production of said enabling signal but produces a zero count signal representative of a zero count in response to said detection pulse signal received when said count is equal to zero;
said announcing means being also connected to said counting means for announcing, in response to said zero count signal, said zero count represented by said zero count signal.

3. A radio paging receiver as claimed in claim 1, characterized in that said counting means comprises:
a memory card (7') which memorizes, as a memorized count, the count initially equal to said positive integer; and
a counting section (7) connected to said detecting means and said memory card for carrying out said counting operation of counting down said memorized count in response to said detection pulse signal to produce said enabling signal when said memorized count is not equal to zero.

4. A radio paging receiver as claimed in claim 3, characterized in that:
said counting section does not carry out said counting operation and production of said enabling signal but produces a zero count signal representative of a zero count in response to said detection pulse signal received when said memorized count is equal to zero;
said announcing means being also connected to said counting section for announcing, in response to said zero count signal, said zero count represented by said zero count signal.

5. A radio paging receiver as claimed in claim 1, characterized in that said detecting means comprises:
a time specifying section (5) for specifying, as a specified time duration, a time duration during which reception of said service information is enabled in said receiver; and
a judging section (6) connected to said processing means and said time specifying section for judging whether or not a reception time duration of reception of said service information signal is within said specified time duration, said judging section producing said service information signal as said detected service information signal and a coincidence signal as said detection pulse signal when said reception time duration is within said specified time duration.

6. A radio paging receiver as claimed in claim 5, characterized in that:
said counting means does not carry out said counting operation and production of said enabling signal but produces a zero count signal representative of a zero count in response to said detection pulse signal received when said count is equal to zero;
said announcing means being also connected to said counting means for announcing, in response to said zero count signal, said zero count represented by said zero count signal.

7. A radio paging receiver as claimed in claim 5, characterized in that said counting means comprises:
a memory card (7') which memorizes, as a memorized count, the count initially equal to said positive integer; and
a counting section (7) connected to said detecting means and said memory card for carrying out said counting operation of counting down said memorized count in response to said detection pulse signal to produce said enabling signal when said memorized count is not equal to zero.

8. A radio paging receiver as claimed in claim 7, characterized in that:
said counting section does not carry out said counting operation and production of said enabling signal but produces a zero count signal representative of a zero count in response to said detection pulse signal received when said memorized count is equal to zero;
said announcing means being also connected to said counting section for announcing, in response to said zero count signal, said zero count represented by said zero count signal.

9. A radio paging receiver as claimed in claim 5, characterized in that said time specifying section specifies a day of the week as said specified time duration.

10. A radio paging receiver as claimed in claim 5, characterized in that said time specifying section specifies different specified times in dependence upon the contents of said service information.

11. A radio paging receiver including: receiving means (11, 12, 13) for carrying out a receiving operation of receiving, as a received signal, a radio signal carrying a call number assigned to said receiver and a message signal representative of a message which succeeds said call number; and processing means (14, S208-S209) for processing, in response to said received signal into said message signal when said processing means detects said call number in said received signal; characterized in that said receiver comprises:
counting means (14, S215) connected to said processing means and having a count initially equal to a first positive integer for counting down said count whenever said processing means detects said call number and for producing, when said count decreases down a zero count, a disabled signal (14') which disables said receiving operation of the receiving means.

12. A radio paging receiver as claimed in claim 11, characterized in that said receiver further comprises announcing means (17, 19) connected to said processing means for announcing, in response to said message signal, said message represented by said message signal.

13. A radio paging receiver as claimed in claim 11, characterized in that said first positive integer is a contractual frequency representative of the number of contractual reception times.

14. A radio paging receiver as claimed in claim 11, characterized in that:
said counting means further has a warning reference value equal to a second positive integer smaller than said first positive integer for producing a warning signal when said count decreases down said warning reference value;
said receiver further comprises warning means (19, 20) connected to said counting means for producing a warning in response to said warning signal.

15. A radio paging receiver as claimed in claim 14, characterized in that said warning reference value is selected by the possessor of said receiver.

16. A radio paging receiver as claimed in claim 14, characterized in that said receiver further comprises:
a first ROM (read-only memory) (15-1) for memorizing said call number to deliver said call number to said processing means;
a second ROM (read-only memory) (15-2) for memorizing said first positive integer to deliver said first positive integer to said counting means;
an RAM (random access memory) (15-3) for memorizing said warning reference value to deliver said warning reference value to said counting means; and
an external interface means (22) for registering said call number and said first positive integer in said first ROM and said second ROM, respectively.

17. A radio paging receiver including: receiving means (11, 12, 13) for carrying out a receiving operation of receiving, as a received signal, a radio signal carrying a call number assigned to said receiver and a message signal representative of a message which succeeds said call number; and processing means (14, S308-S309) for processing, in response to said received signal into said message signal when said processing means detects said call number in said received signal; characterized in that said receiver comprises:
timer means (14, S315) for producing date change information whenever said timer means times 24 hours; and
counting means (14, S316) connected to said date change information producing means and having a count initially equal to a first positive integer representative of the number of contractual reception days for counting down said count whenever said timer means produces said date change information and for producing, when said count decreases down a zero count, a disabled signal (14') which disables said receiving operation of the receiving means.

18. A radio paging receiver as claimed in claim 17, characterized in that said receiver further comprises announcing means (17, 19) connected to said processing means for announcing, in response to said message signal, said message represented by said message signal.

19. A radio paging receiver as claimed in claim 17, characterized in that:
said counting means further has a warning reference value equal to a second positive integer smaller than said first positive integer for producing a warning signal when said count decreases down said warning reference value;
said receiver further comprises warning means (19, 20) connected to said counting means for producing a warning in response to said warning signal.

20. A radio paging receiver as claimed in claim 19, characterized in that said warning reference value is selected by the possessor of said receiver.

21. A radio paging receiver as claimed in claim 19, characterized in that said receiver further comprises:
a first ROM (read-only memory) (15-1) for memorizing said call number to deliver said call number to said processing means;
a second ROM (read-only memory) (15-2) for memorizing said first positive integer to deliver said first positive integer to said counting means;
an RAM (random access memory) (15-3) for memorizing said warning reference value to deliver said warning reference value to said counting means; and
an external interface means (22) for registering said call number and said first positive integer in said first ROM and said second ROM, respectively.
